# EUROPEAN PATENT APPLICATION

(11) **EP 3 955 263 A1**
(43) Date of publication of application: **16.02.2022**
(21) Application number: 19922192.0
(22) Date of filing: 15.04.2019
(51) Int. Cl.: G21F 5/00

(54) **BASKET FOR A TRANSPORTATION AND STORAGE CASK FOR SPENT NUCLEAR FUEL FROM A PRESSURIZED WATER REACTOR**

(30) Priority: 27.03.2019 RU 2019108772
(71) Applicant: NFS LOGISTICS, JOINT-STOCK COMPANY (NFCL JSC), Moscow 115409 (RU); Science and Innovations - Nuclear Industry Scientific Development, Private Enterprise, Moscow, 119017 (RU)
(72) Inventor: VILDEEV, Andrei Viktorovich, Dimitrovgrad Ul'yanovskaya oblast, 433435 (RU); SOKOLOV, Andrei Valerievich, Dimitrovgrad Ul'yanovskaya oblast, 433435 (RU); LEPESHKIN, Alexey Yur'evich, Dimitrovgrad Ul'yanovskaya oblast, 433435 (RU); PETROV, Evgeniy Dmitrievich, Dimitrovgrad Ul'yanovskaya oblast, 433435 (RU)
(74) Representative: Friese Goeden Patentanwälte PartGmbB
(86) International application number: PCT/RU2019/000245
(87) International publication number: WO 2020/197429

(57) **Abstract**

The basket is a metal structure consisting of a base (supporting disk) (1), heat-removing aluminum disks (2), intermediate disks (3), channels (4) for sealed canisters, vertical clamping elements, in this case, strainers (5) and (6).

Base (1) - welded structure made of corrosion-resistant steel performs the function of the carrying element of the basket. From above, the base (1) has (7) grooves and (8) hooks for installing canisters.

Disks (2) and (3) are equidistant to each other in certain order, thereat two rows of round apertures are made in disks (2) and (3) relative to their axes. There are two apertures made in the inner row of apertures and eight - in the outer. Channels (4) (pipes) made of boron steel are installed in the holes, and the channels are made with the possibility of placing sealed canisters with spent fuel assemblies into them. Channels (4) protect the sealed canisters (4) from mechanical damage.

Sleeves (9) made of aluminum alloy are installed between steel disks (3) and aluminum disks (2). Assembling all parts of the basket into a single section is ensured by strainers (5) and (6), located along the perimeter of disks (2) and (3), as well as around the circumference between the axis of inner and outer rows of apertures.

## Description

The invention relates to baskets of containers for transportation and temporary storage of fuel assemblies of a water-cooled water-moderated power reactor (VVER).

The closest of the prior art to the claimed invention is a container basket containing a base on which steel disks are fixed in height and heat-removing disks located between the steel disks equidistant from each other, vertical clamping elements connecting the steel and heat-removing disks to the basket section, thereat two rows of holes are made in the disks relative to their axis, pipes are installed in the holes, and the racks are located along the outer perimeter of the disks (Russian patent No. 2642853, published on 29.01.2018).

Central carrying pipe is welded to the base in the named basket. Steel and heat-removing disks form at least two sections. Each section is made of two steel disks - upper and lower, connected by vertical clamping elements, in this case - by racks. At least five heat-removing disks and separation sleeves of aluminum alloy are installed between steel disks

The named sections are fixed on the base between each other by height by a central carrying pipe.

In the first row relative to the carrying pipe six pipes are placed and in the second - twelve pipes.

Assembly of the basket is carried out as follows:
The lower steel disk is welded to the base with the central carrying pipe on the top. Steel racks are screwed into that disk; the heat-removing disks are threaded with sleeves between them. Hexagonal pipes are installed in hexagonal sockets of heat-removing disks. The entire assembly is covered by upper steel disk, forming a section of the basket. Tightening of the upper disk to racks of the section is made by screwing steel racks in lower steel disk of the next section. The process shall be continued to the upper section. A protective disk is installed over the upper steel disk by screwing bolts to racks of the last section. A head for load gripping equipment is installed on the central carrying pipe.

The said basket is used in transport and storage container (TSC), which is intended for transportation and storage of specification-grade spent fuel assemblies (SFA) in the quantity of 18 pieces. However, apart from specification-grade SFA, there is a need for transportation of nonconforming SFA from VVER reactors.

When transporting nonconforming SFA the risk of more severe consequences of accidents is escalating, so the construction of the SFA shall maximally ensure the safety of transportation of damages assemblies.

Th necessity to create a new TSC for SFA of VVER reactors of advanced types is conditioned by their hard nuclear, radiation and heat characteristics. In this connection the basket of such TSC for transportation of nonconforming SFA may be used only after adjustment.

It should also be taken into account that the dimensions of the TSC of the VVER-1000/1200 type reactors for the Russian Federation are limited by the existing circulation scheme. So, the baskets with certain quantity of SFA should fall within the transportation and storage sets of existing scheme. The placement of the maximum possible spent nuclear fuel in a basket of existing dimensions requires a reduction in the distance between the spent fuel assemblies.

Taking into account the existing dimensions of the TSC, when calculating for radiation safety, it was found that the largest number of substandard spent fuel assemblies transported in terms of the radiation load on service personnel is 10, and the increased safety requirements for the transportation of nonconforming spent fuel assemblies exposes the following main disadvantages of the prototype.

The presence of several sections requires precise docking of the sections with each other to ensure the alignment of the channels (pipes), in order to exclude the possibility of their catching when moving (loading / unloading) between the sections and mechanical damage.

In addition, calculations have shown that the energy release from the spent fuel assemblies in the selected canister is distributed unevenly - with a maximum in the center and a minimum in the periphery. Therefore, the use of sections of said structure located one above the other does not guarantee uniform heat removal from the spent fuel assemblies along the entire height of the basket.

In connection with the foregoing, the technical problem of the invention is the transportation and storage of the maximum number of nonconforming spent fuel assemblies of the VVER-1000/1200 type reactors (10 pieces) in a container basket that fit into the dimensions of the TSC, while ensuring transport safety parameters, in particular, radiation safety, nuclear safety heat removal from spent fuel assemblies.

The technical result is the preservation of the dimensions of the existing baskets of transportation and storage sets of VVER reactors during the transportation of nonconforming fuel with the provision of transportation safety parameters, in particular, radiation, nuclear safety, heat removal from the spent fuel assemblies to the TSC wall, as well as improving the maintainability of the basket.

The technical result is achieved by the fact that the basket of the container for transportation and storage of spent nuclear fuel of a water-cooled water-moderated power reactor, containing a base on which steel disks are fixed in height and aluminum disks located between the steel disks equidistant from each other, vertical clamping elements connecting steel and aluminum disks into the basket section, while two rows of apertures are made in the disks relative to their axis, channels are installed in the holes, and the vertical fastening elements are located along the outer perimeter of the disks, the basket is made of one section and equipped with additional vertical disk fastening elements located along the circles between the axis of the inner and outer rows of apertures in the disks, the holes and channels are made round with the possibility of placing canisters in them for spent fuel assemblies, while grooves and hooks for canisters are made in the base of the cover, in the inner row of apertures two other apertures are made and eight apertures - in the outer row.

In addition, the basket section is fitted with additional steel disks, and the steel disks equidistant from the aluminum disks.

In addition, aluminum and steel disks alternate as follows: 4-1-4-1-3-1-3-1-3-1-3-1 starting from the base.

In addition, the vertical disk attachment elements are made in the form of ties.

The ability to install sealed canisters (known from the prior art) for spent nuclear fuel assemblies into the canals of the basket will allow nonconforming spent fuel assemblies to be transported to the TSC without the spread of radioactive substances into the environment, which will ensure the safety requirement for the transportation and storage of spent nuclear fuel.

The round shape of the channels, the grooves and the hook for the canisters at the base of the basket allow placing the canisters in the basket.

The basket, made of one section, will simplify its design, ensure the alignment of the apertures for the channels, and improve the heat removal from the spent fuel assemblies due to the uniform distribution of steel and heat-removing disks along the height.

An additional row of vertical clamping elements replaces the central pipe, allowing the optimal number of nonconforming spent fuel assemblies to be placed with a reduced distance between them, maintaining the dimensions of the existing TSC and providing the required strength characteristics of the basket during operation and in emergency situations.

The implementation of vertical elements for clamping the disks to each other in the form of ties will make the basket section more fixed in height due to the vertical compression force.

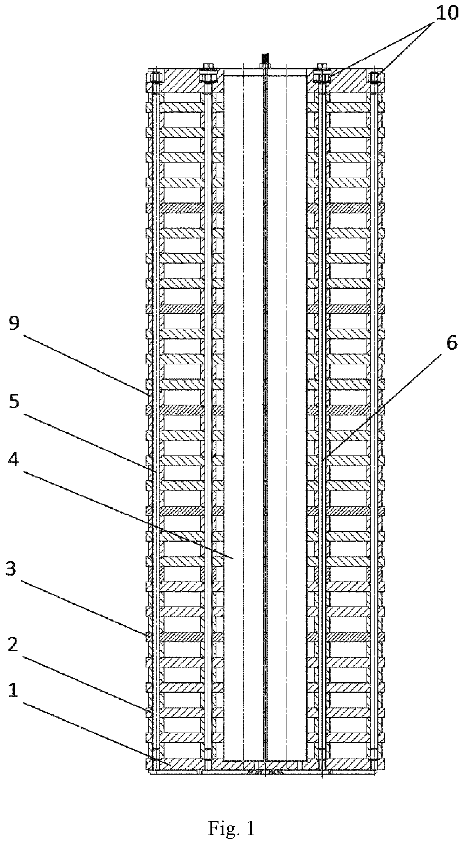

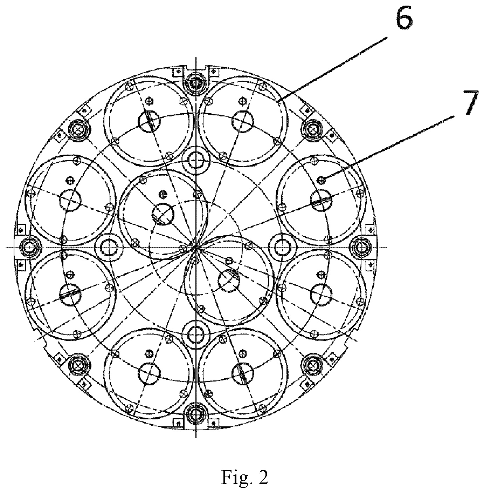

The invention is illustrated by drawings, where FIG. 1 shows the basket (longitudinal section), FIG. 2 shows the basket (cross section).

The basket is a metal structure consisting of a base (supporting disk) 1, heat-removing aluminum disks 2, intermediate disks 3, channels 4 for sealed canisters, vertical clamping elements, in this case, ties 5 and 6.

Base (1) - welded structure made of corrosion-resistant steel performs the function of the carrying element of the basket. From above, the base (1) has (7) grooves and (8) hooks for installing canisters. The hooks (8) can be made, for example, in the form of a mating hole for the key in the canister, made in the groove (6) and off-centered.

The basket may be fitted with additional steel disks (3). Disks (2) and (3) are equidistant to each other in certain order, thereat two rows of round apertures are made in disks (2) and (3) relative to their axes. There are two apertures made in the inner row of apertures and eight - in the outer. Channels (4) (pipes) made of boron steel are installed in the holes, and the channels are made with the possibility of placing sealed canisters with spent fuel assemblies into them. Channels (4) protect the sealed canisters (4) from mechanical damage.

Aluminum disks (2) simultaneously solve safety problems and perform the functions of heat removal from the spent fuel assemblies. Intermediate disks (3) are made of corrosion-resistant steel.

Sleeves (9) made of aluminum alloy are installed between steel disks 3 and aluminum disks (2). Assembling all parts of the basket into a single section is ensured by strainers (5) and (6), located along the perimeter of disks (2) and (3), as well as around the circumference between the axis of inner and outer rows of apertures.

Strainers (5, 6) are forming a stud, the lower end of which is screwed into the supporting disk (1), and the upper end is fixed with a nut (10).

Assembly of the basket is carried out as follows:

Strainers (5) and (6) are screwed tightly into supporting disk (1), which is the carrying element of the basket. Further, bushings (9), disks (2) and (3) are installed on strainers (5) and (6), bushings (9) are also installed between disks (2) of the cover and intermediate disks (3). The sequence of alternation of disks (3) and (2) is as follows: 4-1-4-1-3-1-3-1-3-1-3-1 starting form supporting disk (1). Such disposition of disks ensures better heat removal from the SFA. Further, channels (4) for sealed canisters in the amount of 10 pieces are passed through the apertures of the disks (2) and (3). Further, bushings 9 are installed on the strainers (5), (6) and the last steel disk, the whole structure is fixed with nuts (10), forming a section of the basket.

The operations for loading / unloading sealed canisters into the basket are as follows.

With the help of a reloading machine and a special gripper, a sealed canister with nonconforming spent fuel assemblies is guided and lowered into channel (4) of the basket until it stops. In this case, the lock on the bottom of the canister (key) must fall into hole (8) at the bottom of the base (1), which ensures that the canister does not rotate around the axis during transportation and when working with the gripper of the reloading machine. Next, the grip and the canister are released. All other canisters are loaded into the cells of the canisters one by one. Unloading of sealed canisters is carried out in the reverse order.

The possibility to install sealed canisters for spent fuel assemblies into canals (4) of the basket makes it possible to transport nonconforming spent fuel assemblies to the TSC without spreading radioactive substances into the environment, which ensures the safety requirement for the transportation and storage of spent nuclear fuel.

The round shape of the channels, grooves (7) and the hook (8) for canisters at the base of the basket allow you to place the canisters in the basket and exclude their damage during operation.

The basket, made of one single section, simplifies its design, ensures the alignment of the apertures for channels 4, and improves heat removal from the spent fuel assemblies due to the uniform distribution of steel and heat-removing disks along the height.

An additional row of strainers (6) is a replacement for the central pipe, allowing the optimal number of nonconforming spent fuel assemblies to be placed with a reduced distance between them, while maintaining the dimensions of the existing TSC and providing the required strength characteristics of the basket during operation and in emergency situations.

Thus, the proposed TSC ensures the transportation and storage of the optimal number of nonconforming spent fuel assemblies from VVER-1000/1200 reactors (10 pieces) in a container basket that fits into the dimensions of the existing TSC, while ensuring transportation safety parameters, in particular, radiation safety, nuclear safety and heat removal from SFA.

## Claims

1. A basket for a transportation and storage cask for spent nuclear fuel from a pressurized water reactor, containing a base on which steel disks are fixed in height and aluminum disks located between the steel disks equidistant from each other, vertical clamping elements connecting the steel and aluminum disks into a section cover, while two rows of apertures are made in the disks relative to their axis, channels are installed in the apertures, and vertical clamping elements are located along the outer perimeter of the disks, **characterized in that** the basket is made of one section and is equipped with additional vertical disk clamping elements located in a circle between axes of the inner and outer rows of apertures in the disks, the apertures and channels are made round with the possibility of placing canisters for spent fuel assemblies in them, while grooves and hooks for canisters are made in the base of the basket, two apertures are made in the inner row of apertures , and eight of those in the outer row.

2. The basket according to item 1, **characterized in that** the basket section is provided with additional steel disks, the steel disks being equidistant from the aluminum disks.

3. The basket, according to item 2, **characterized in that** the aluminum and steel disks alternate as follows: 4-1-4-1-3-1-3-1-3-1-3-1, starting from the base.

4. The cover according to item 1, **characterized in that** the vertical disk clamping elements are made in the form of strainers.
